# EUROPÄISCHE PATENTANMELDUNG

(11) **EP 1 217 125 A2**
(43) Veröffentlichungstag der Anmeldung: **26.06.2002**
(21) Anmeldenummer: 02005934.1
(22) Anmeldetag: 16.12.1998
(51) Int. Cl.: D21H 25/18

(54) **Wirkstoff zur Entsäuerung von Schriftgut**

(30) Priorität: 07.04.1998 EP 98201091
(62) Teilanmeldung aus: 98958763.9
(71) Anmelder: RUAG Munition, 3602 Thun (CH)
(72) Erfinder: Herren, Christian, 3204 Rosshäusern (CH)
(74) Vertreter: Streitzig, Heinz

(57) **Zusammenfassung**

Die moderne Papierherstellung mittels Holzschliff hat zu einer fortdauernden Übersäuerung des Schriftgutes geführt und droht dieses unwiderruflich zu vernichten.

Durch einen alkalischen Wirkstoff, dessen Hauptbestandteil ein Salz mit kleiner Wasseraffinität ist, kann diese Übersäuerung neutralisiert werden bzw. es kann sogar ein alkalisches Depot auf dem Papier aufgebracht werden.

Eine geeignete Vorrichtung zur Entsäuerung mittels dieses Wirkstoffes weist einen verschliessbaren Kasten (10) auf, in dem in einem Ständer (1) auffächerbares Schriftgut behandelt wird. Dazu wird über einen Schneckenförderer (32) in einen durch einen Ventilator (19a) umgewälzten Luftstrom der pulverförmige Wirkstoff eingetragen, wobei das Schriftgut durchgeblättert und beladen wird.

## Beschreibung

Die vorliegende Erfindung bezieht sich auf einen Wirkstoff nach dem Oberbegriff des Anspruchs 1.

Seit der Erfindung des Holzschliffs im Jahr 1844 ist weltweit das gesamte Schriftgut einem durch eine inhärente Übersäuerung bedingten Zerfall unterworfen. Um das in Milliarden Dokumenten gespeicherte Kulturgut zu retten, wurden zahlreiche Versuche unternommen, die Papiermasse zu entsäuern.

Diese Versuche lassen sich in drei Gruppen unterteilen:
1. Nassbehandlung
2. Gasbehandlung
3. Trockenbehandlung mit alkalischem Pulver

Als gefährlichste Methode zur Behandlung von wertvollen Dokumenten hat sich die Nassbehandlung mit Lösungen wie Peroxid etc. erwiesen; die Blätter verziehen sich oder werden wellig, in einigen Fällen löst sich sogar die Druckfarbe und verläuft. Die Anwendung von Gasen wie Morpholindämpfe etc. erfordert den Einsatz einer aufwendigen Vakuum-Kammer und verlängert zusätzlich die Zykluszeit für die Behandlung. Die Trockenbehandlung mit alkalischen, pulverförmigen Substanzen ist oft am ungleichmässigen Pulvereintrag und an der Wirksamkeit der Substanz gescheitert.

Aus der US -A- 5,433,827 ist ein Verfahren zur Entsäuerung von Schriftgut sowie eine Substanz gemäss dem Oberbegriff des Anspruchs 1 bekannt. Nach diesem Verfahren werden die Seiten von Büchern mit Papier, welches mit einer hochkonzentrierten Entsäuerungssubstanz belegt ist, in Kontakt gebracht und mechanisch, unter Druck, bei erhöhter Feuchtigkeit - über 75%, bevorzugt 97% relativer Feuchte - mehrere Tage gepresst. Als Entsäuerungssubstanz dienen dabei Alkali- und Erdalkalicarbonate und ihre Gemische. Als Alternative ist vorgeschlagen, die zur Entsäuerung bestimmten Seiten mit Kalzium- oder Magnesiumcarbonat zu bestäuben. Die Verfahren basieren auf einer Ionenmigration der Entsäuerungssubstanz und sind daher in hohem Masse druck- und feuchtigkeitsabhängig. Die aufgezeigten Verfahren sind zudem sehr arbeitsintensiv und dauern von einem Tag bis zu mehreren Wochen.

Es ist Aufgabe der Erfindung, einen rasch reagierenden Wirkstoff zur Entsäuerung von Schriftgut, insbesondere auch von gebundenen Büchern zu schaffen. Die Qualität des Papiers soll dabei von untergeordneter Bedeutung sein, d.h. der Wirkstoff soll möglichst universell anwendbar sein. Er darf das Schriftgut nicht beschädigen oder verändern. Der Eintrag der Wirksubstanz muss über die ganze Papierfläche gleichmässig erfolgen und von der ersten bis zur letzten Seite eines Buches den gleichen pH-Wert erzielen.

Diese Aufgabe wird durch eine Wirksubstanz mit den Merkmalen des Anspruchs 1 gelöst.

Der Wirkstoff nach Anspruch 1 zeichnet sich durch eine gute Haftung an der Papieroberfläche aus und verteilt sich auf dieser aufgrund der im Papier noch'vorhandenen Restfeuchte dreidimensional.

In abhängigen Ansprüchen sind bevorzugte Weiterbildungen beschrieben.

Die im Anspruch 2 beschriebene Mischung dient der Einstellung eines resultierenden pH-Wertes von 9.0 bis 9.5, d.h. es stellt sich ein alkalischer Überschuss auf dem Papier ein, wodurch eine weiter fortschreitende Säuerung aufgefangen wird.

Die Mischung nach Anspruch 3 hat sich für eine selektive Einstellung eines pH-Wertes von 8.2 bis 8.5 bewährt und wird bei weniger belasteten Dokumenten verwendet.

Alternativ wird eine. Mischung nach Anspruch 4 eingesetzt, deren resultierender pH-Wert in einem Bereich von 7.2 bis 7.5 einstellbar ist.

Durch den Zusatz von Polystyrolkugeln nach Anspruch 5 erhöht sich die Rieselfähigkeit und damit die Transportfähigkeit des Wirkstoffes.

Nachfolgend werden anhand von Zeichnungen Ausführungsbeispiele der Erfindung sowie eine zu deren Einsatz geeignete Vorrichtung näher beschrieben, wobei für gleiche Funktionsteile gleiche Bezugsziffern verwendet sind.

Es zeigen:
- Fig. 1: eine Aufnahmevorrichtung für auffächerbares Schriftgut,
- Fig. 2: Seitenteile der Aufnahmevorrichtung Fig. 1, in Draufsicht,
- Fig. 3: eine Schnittdarstellung durch die Seitenteile Fig. 2,
- Fig. 4: eine Gesamtansicht einer Vorrichtung zur Entsäuerung, mit geöffnetem Schwenkdeckel,
- Fig. 5: Einzelheiten aus Fig. 4, in einer Ausschnittvergrösserung, wobei hier Bücher und Ordner in die Vorrichtung eingelegt sind,
- Fig. 6: Teile der Vorrichtung entsprechend Fig. 5 in ihrer Arbeitsstellung, wobei das Durchblättern des Schriftgutes ersichtlich ist,
- Fig. 7: eine vergrösserte Darstellung der Luftzuführung nach den Fig. 4 bis 6,
- Fig. 8: einen Teilschnitt der Luftzuführung nach Fig. 7,
- Fig. 9: die Luftzuführung nach Fig. 8 in einer um 90° gedrehten Draufsicht,
- Fig. 10: die Darstellung nach Fig. 4 bei entnommener Aufnahmevorrichtung,
- Fig. 11: die Vorrichtung nach Fig. 4 und 10 von hinten betrachtet, bei geschlossenem Schwenkdeckel,
- Fig. 12: die Vorrichtung bei geschlossenem Schwenkdeckel von vorne betrachtet,
- Fig. 13: ein vereinfachtes Pneumatikschema der gesamten Anlage und
- Fig. 14: ein erweitertes, vereinfachtes Pneumatikschema.

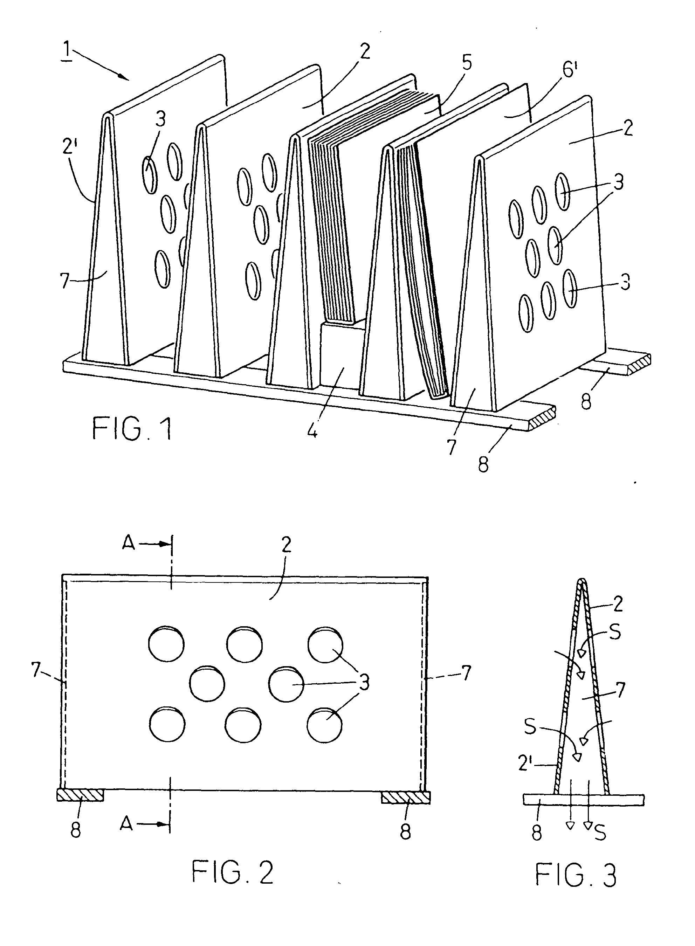

In Fig. 1 ist eine Aufnahmevorrichtung mit 1, ein Ständer für Schriftgut, insbesondere für Bücher, Broschüren und dgl. bezeichnet. Dieser weist links- und rechtsseitige Stützteile 2' bzw. 2 auf. Diese Stützteile besitzen mehrere Durchbrüche 3, welche dem Luftdurchlass dienen. Kleinere Bücher 5 werden auf einen einfachen Sockel 4 gestellt, damit ihre Stirnseite auf gleiche Höhe mit anderem Schriftgut 6', hier eine Broschüre, zu liegen kommt.

Die Stützteile 2, 2' sind stirnseitig mit Abdeckungen 7 versehen und auf Montage- und Transportleisten 8 befestigt. Die Schnittdarstellung Fig. 3 zeigt den Schnitt A--A aus Fig. 2. Daraus ist ersichtlich, wie sich innerhalb der Stützteile 2, 2' die Strömung S zu einer Kanalströmung ausbildet und die Buchdeckel nach aussen zieht und das Buch öffnet.

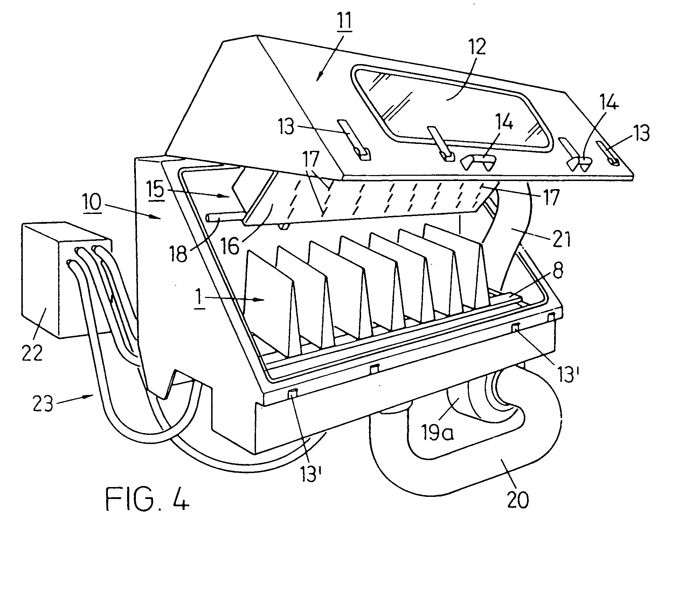

Die Vorrichtung nach Fig. 4 besteht im wesentlichen aus einem verschliessbaren Kasten 10 mit Verschlussteilen 13', welcher den Ständer 1 aufnimmt. Der Schwenkdeckel des Kastens 10 ist mit 11 bezeichnet und besitzt auf seiner Vorderseite ein Sichtfenster 12, Verschlussteile 13 sowie Handgriffe 14. Im Schwenkdeckel 11 verschieblich befestigt, ist ein kastenförmiger Luftverteiler 15 mit einer Abströmplatte 16, die ihrerseits mit Luftauslässen 17 versehen ist. Zur Längsverschiebung des Luftverteilers 15 dient eine abgedichtete Führungsstange 18, welche hier den Luftverteiler 15 stirnseitig überragt.

Unterhalb des Kastens 10 ist ein Niederdruckventilator 19a montiert, der über einen grossvolumigen Absaugschlauch 20 und einen ebensolchen Zuluftschlauch 21 die Luft aus dem Inneren des Kastens 10 absaugt und über den Luftverteiler 15 und die Luftauslässe 17 wieder zuführt. Zusätzlich ist ausserhalb des Kastens 10 ein Kühlaggregat 22 angeordnet, welches über Schläuche 23 mit dem Kasten in Verbindung steht.

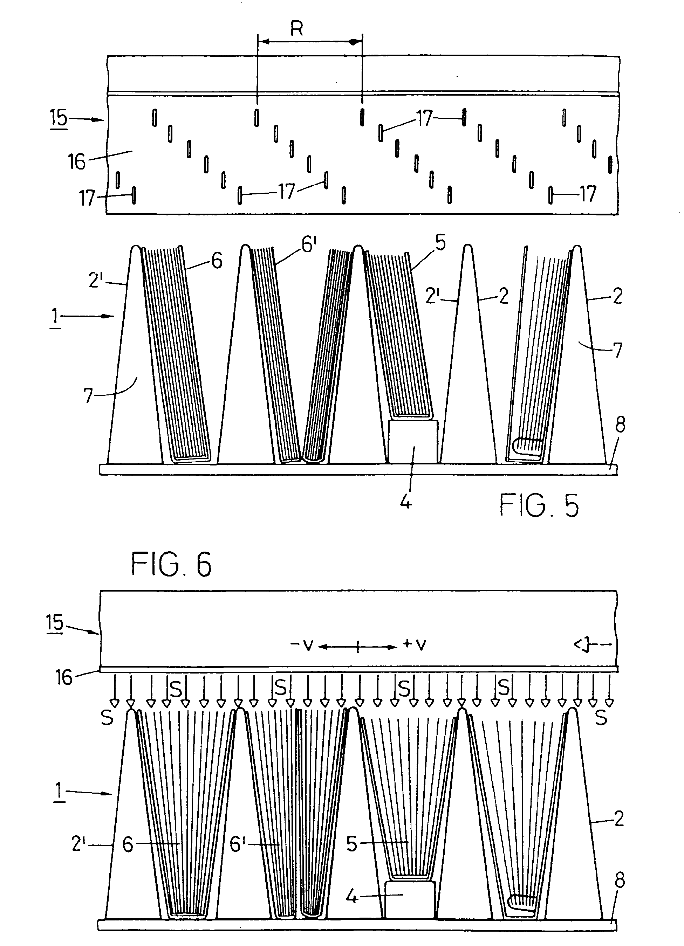

In der Darstellung Fig. 5 ist der Schwenkdeckel 11 - nicht gezeichnet - geöffnet; die Position des Luftverteilers 15 aber entsprechend eingezeichnet. Hier sind die parallel versetzt zueinander angeordneten Luftauslässe 17 in Draufsicht zu sehen. Die Rasterbreite einer Reihe hinter einander parallel versetzter Luftauslässe 17 ist mit R bezeichnet.

Entsprechend Fig. 6 ist der Schwenkdeckel 11 geschlossen und die Anlage in Betrieb. Dabei wird der Luftverteiler 15 mit konstanter Geschwindigkeit, um das Mass R, vgl. Fig. 5, hin und her bewegt, was durch +v und -v charakterisiert ist.- Die Seiten des Schriftgutes 5, 6, 6' werden durch die Strömung S einzeln durchgeblättert und mit Wirkstoff beladen.

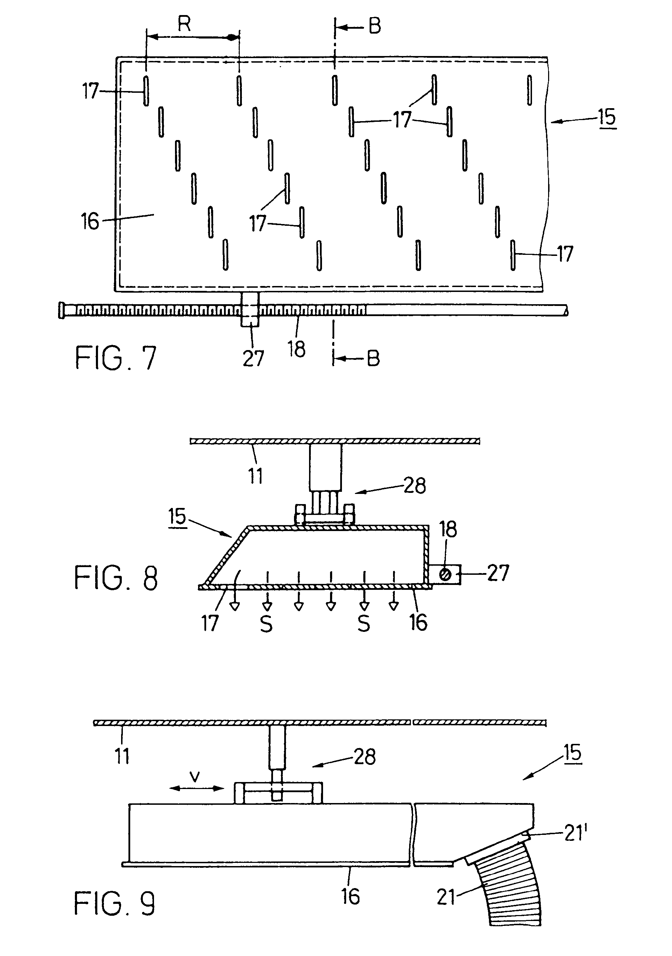

In Fig. 7 ist als weitere Einzelheit die Führungsstange 18 mit ihrer Gleitbüchse 27 eingezeichnet, welche zusätzlich mit einem nicht dargestellten Faltenbalg vor Verschmutzung durch den Wirkstoff geschützt ist.

Die Schnittdarstellung Fig. 8 entspricht dem in Fig. 7 eingezeichneten Schnitt B--B und zeigt den kastenförmigen Aufbau des Luftverteilers 15 genauer. Dieser ist über eine Aufhängung/Führung 28 am Schwenkdeckel 11 befestigt und durch die mit den Luftauslässen 17 versehene Abströmplatte 16 abgeschlossen.

Die Darstellung Fig. 9 zeigt die Bewegungsrichtung v des Kastens 15 und zusätzlich rechtsseitig den flexiblen Zuluftschlauch 21 mit seinem Anschluss-Stutzen 21'.

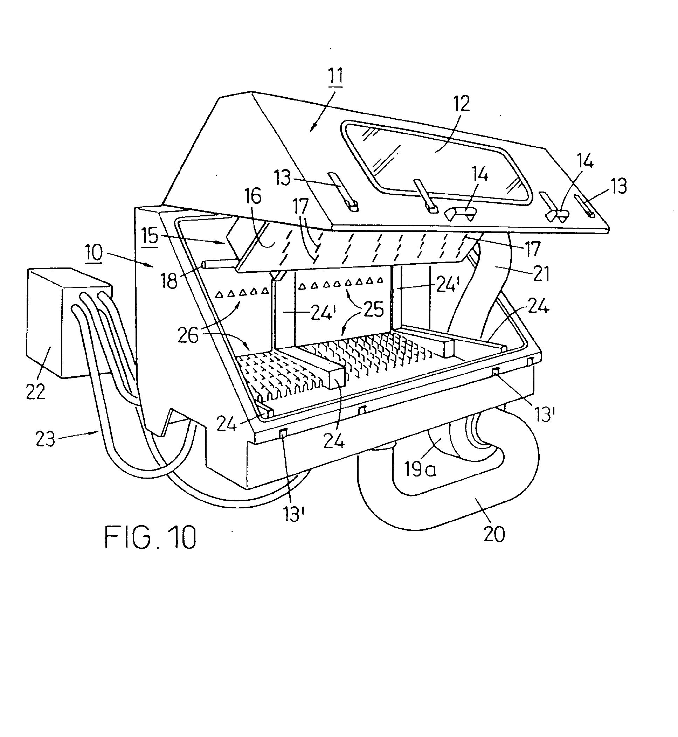

In Fig. 10 sind wiederum die gleichen Einzelheiten wie in Fig. 4 zu sehen, nur ist hier die Aufnahmevorrichtung 1 entnommen, so dass Auflagewinkel 24, 24' und Kühl- Lamellen/Leitbleche 25 sowie Heiz-Lamellen 26 mit Leitblechen sichtbar werden.

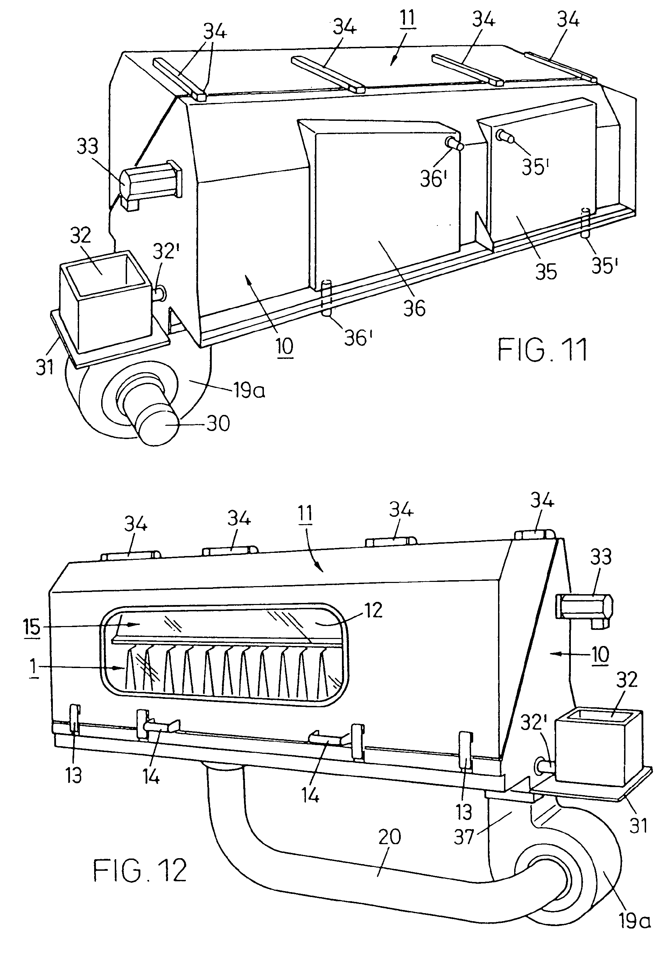

Nach Fig. 11 weist die Rückseite der Vorrichtung ein Heisswasser-Reservoir 35 und ein Kühlflüssigkeits-Reservoir 36 auf, welche entsprechende Anschlüsse 35' und 36' besitzen und mit den Schläuchen 23, Fig. 10, verbunden sind. Im weiteren sind hier der Niederdruckventilator 19a mit seinem Antrieb, einem Elektromotor 30 und ein auf einer Trägerplatte 31 aufgebauter Schneckenförderer 32 mit einer Pulverzuführung 32' zu sehen. Darüber befindet sich ein Getriebemotor 33, welcher dem Linearantrieb des Luftverteilers 15 dient, vgl. Fig. 6 und 7. Ebenfalls sichtbar sind oberseitige Scharniere 34, die zum Aufklappen des Schwenkdeckels 11 bestimmt sind.

Im betriebsbereiten Zustand stellt sich die Vorrichtung gemäss Fig. 12 dar, wobei die Verschlussteile 13 den kastenförmigen Innenraum hermetisch abschliessen. Sichtbar ist hier auch der Druck-Anschluss 37 am Kasten 10.

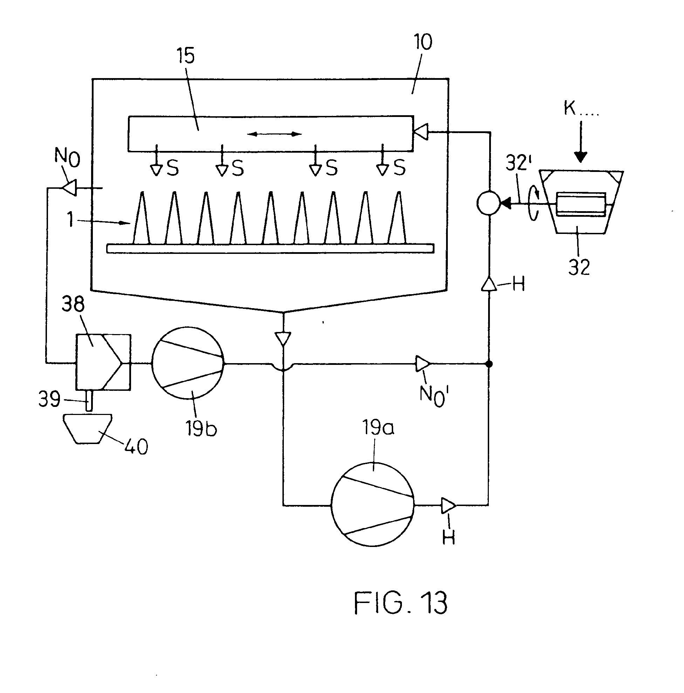

Die Prinzipdarstellung Fig. 13 zeigt wiederum den Kasten 10 mit seinem hin- und herbewegbaren Luftverteiler 15 und dem eingelagerten Ständer 1. Ein Hauptstrom H, beschleunigt durch einen Niederdruckventilator 19a saugt Luft vom Boden des Kastens 10 ab und fördert sie über den Luftverteiler 15 wieder in diesen zurück. In den Hauptstrom H greift die Pulverzuführung 32' des rotierenden Schneckenförderers 32 ein, welcher mit dem Wirkstoff - mit K bezeichnet - beschickt wird.

Nach der Beendigung eines Behandlungsprozesses wird der Ventilator 19a abgeschaltet und ein weiterer Niederdruckventilator 19b in einem Nebenstrom N₀ zugeschaltet, der über ein Filter 38 den pulverförmigen Wirkstoff K aus dem Luftstrom extrahiert und über einen Ablauf 39 in einen Auffangbehälter 40 abführt. Der gereinigte Nebenstrom ist mit N₀' bezeichnet.

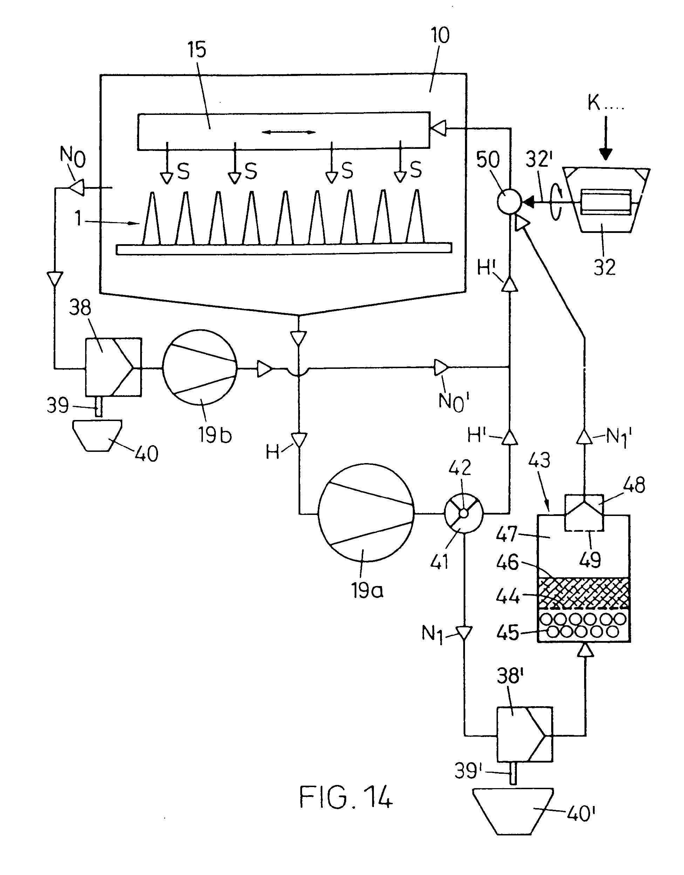

Die gegenüber Fig. 13 erweiterte Anlage Fig. 14 besitzt zusätzlich zu Fig. 13 eine Dreiweg-Klappe 41, welche den Hauptstrom H in einen Hauptstrom H' und einen Nebenstrom N₁ aufteilt. Der Nebenstrom N₁ ist über ein weiteres Filter 38' mit Ablauf 39' und Auffangbehälter 40' zu einer Entfeuchtungskammer 43 geführt, welche ein Träger-Sieb 44 aufweist, wobei unterhalb des Siebes 44 kugelförmige Luftverteiler 45 und über dem Sieb 44 Entfeuchtungsmaterial 46 eingelagert sind. Der darüber befindliche Sammelraum 47 besitzt ein Filter 48 mit Sieb-Einlass 49 und liefert einen entfeuchteten Nebenstrom N₁' zu einer Mischdüse 50, welche als zweistoffiger Ejektor ausgebildet ist. Die Düse 50 fördert den Wirkstoff K mittels des entfeuchteten Nebenstromes N₁' in den Luftverteiler 15.

Die Dreiweg-Klappe 41 ist zentral mit einem Stellglied 42 verbunden, welches eine stufenlose Aufteilung des Hauptstromes H' und des Nebenstromes N₁ erlaubt.

Die Wirkstoffe K lassen sich in einfachster Weise und kostengünstig erstellen, indem die Komponenten mehrfach miteinander vermahlen und anschliessend getrocknet werden.

### Mischung 1

90 % KHCO₃ mit 10 % K₂CO₃, eingestellt auf eine Restfeuchtigkeit von 10 bis 15 Gew.-% ergeben auf dem behandelten Papier, nach mittlerer Behandlungszeit einen pH-Wert von 9.0 bis 9.5.

### Mischung 2

99 % KHCO₃ mit 1 % K₂CO₃, eingestellt auf eine Restfeuchtigkeit von ca. 10 Gew.-% ergeben auf dem behandelten Papier einen pH-Wert von 8.2 bis 8.5.

### Mischung 3

99,9 % KHCO₃ mit 0,1 % K₂CO₃, eingestellt auf eine Restfeuchtigkeit von ca. 10 Gew.-% ergeben auf dem behandelten Papier einen pH-Wert von 7.2 bis 7.5.

Es hat sich gezeigt, dass die Restfeuchtigkeit der Mischungen bei einer Lagerung von einigen Tagen bei Raumtemperatur sehr rasch zunimmt, insbesondere bei der Mischung 1.

Zur Verbesserung der Rieselfähigkeit bzw. der Transportfähigkeit des Wirkstoffes in der Anlage empfiehlt es sich, eine elektrostatisch aktive Substanz beizumengen, beispielsweise in Form von Polystyrolkugeln von weniger als 2 mm Durchmesser.

Zur Aufbereitung der Komponenten hat sich folgendes bewährt:
- Grobvermischen der Haupt-Komponenten KHCO₃ und K₂CO₃
- Zuschlag von eventuellen weiteren Komponenten, beispielsweise Kaliumhydrogenphosphat oder Ammoniumthiocyanat
- Vermahlen der Mischung in einer Standard-Stiftmühle in wenigstens zwei Durchläufen
- leichtes Trocknen der Mischung im Umlufttrockenschrank bei maximal 50°C während 12 h, in einer Schichtdicke von 5 mm
- Abpacken in luft- und feuchtigkeitsdichtem Material

### Prozessführung

Das zu behandelnde Schriftgut 5, 6 und 6' wird mit dem Rücken nach unten in den Ständer 1 eingelegt und in den Kasten 10 eingebracht und verschlossen. Während eines Zeitintervalles von 15 bis 30 Minuten wird der Hauptstrom H durch den Niederdruckventilator 19a über den Luftverteiler 15 zugeführt und das Schriftgut soweit erforderlich bei Raumtemperatur oder leicht erhöhter Temperatur getrocknet, bis es ca. 0.5 bis 2 % des Eigengewichtes verliert. Dabei wird das Schriftgut - meist Bücher - vollständig durchgeblättert, indem der Luftverteiler 15 sich linear, sägezahnartig hinund herbewegt und dabei den Weg R, vgl. Fig. 7, überstreicht.

Jetzt wird über den Schneckenförderer 32 Wirkstoff K - je nach zu erreichendem pH-Wert ausgewählt - dem Hauptstrom H zugeführt. Die Masse an notwendigem Wirkstoff K ist abhängig von der Masse Schriftgut und beträgt etwa 5 % von dessen Masse. Durch die turbulente Luftführung in Kasten 10 wird eine homogene Verteilung des Wirkstoffes auf dem Papier sichergestellt, wobei überschüssiges Material nach einer Behandlungsdauer von 10 bis 15 Minuten durch Abschalten des Hauptstromes H und Zuschalten des Nebenstromes N₀ aus dem Schriftgut abgeführt wird und dieses weitgehend staubfrei entnommen werden kann.

Der Wirkstoff K kann mehrfach genutzt werden und muss vor jeder Behandlung auf seine vorgegebene Masse ergänzt werden. Durch erneutes Mahlen und Trocknen lässt sich der Wirkstoff zudem rezirkulieren bzw. wieder auf die gewünschte Feuchtigkeit einstellen.

In gewissen Fällen kann es zweckmässig sein, das Schriftgut nach der Behandlung mit dem Wirkstoff K wieder zu befeuchten, d.h. zu rekonditionieren. Dies geschieht am einfachsten in einem durchströmten Behältnis, welches mit einem Ultraschall-Zerstäuber ausgerüstet, einen feuchten Luftstrom erzeugt.

### Qualitätsmerkmale

Die Behandlung zeichnet sich durch eine vollständige Entsäuerung des Schriftgutes aus und bringt eine nachweisbar vorhandene alkalische Reserve auf dieses auf. Die Ablagerung dieser Reserve beträgt im Mittel 0.5 % des Papiergewichtes. Es findet keine Reaktion mit der Papiermatrix oder mit dem Satz- und Druckbild statt, d.h. es sind keine thermischen Einflüsse und keine Veränderung der Druckqualität zu verzeichnen. Es resultieren keine toxikologisch bedenklichen Ablagerungen; es ist keine Geruchsbelastung des Schriftgutes vorhanden. Es entstehen keine Verfärbungen und keine permanenten staubförmigen Ablagerungen, auch nicht auf Hochglanzdruckseiten. Der Buchrücken bleibt mechanisch unversehrt und zwar abhängig von der Art der Bindung. Die Behandlungsqualität ist unabhängig von der Anzahl Seiten; sie wurde mit Büchern von 30 bis 1000 Seiten verifiziert. Die Formate des Schriftgutes spielen ebenfalls keine Rolle in Bezug auf die Behandlungsqualität und/oder Art.

| Untersuchung an Schriftgut unterschiedlicher Papiergewichte | | | | |
|---|---|---|---|---|
| **Qualitäts- kriterium** | **Offenes Papier 50 g/m**^{**2**} | **Offenes Papier 80 g/m**^{**2**} | **Papier gestrichen 80 g/m**^{**2**} | **Papier gestrichen 120 g/m**^{**2**} |
| Vollständige Entsäuerung | erfüllt | erfüllt | erfüllt | erfüllt |
| Abgelagerte alkalische Reserve | bis zu 2% CaCO₃ | bis zu 1.2 % CaCO₃ | 0.4 bis 0.6 % CaCO₃ | 0.3 bis 0.4 % CaCO₃ |
| Keine nach-weisbare Reaktion mit Papier und Druck | erfüllt | erfüllt | erfüllt | erfüllt |
| Keine toxikologisch bedenklichen Ablagerungen | erfüllt | erfüllt | erfüllt | erfüllt |
| Keine Geruchsbelastung | erfüllt | erfüllt | erfüllt | erfüllt |
| Keine Verfärbung | erfüllt | erfüllt | erfüllt | erfüllt |
| Keine staubförmigen Ablagerungen (permanent) | erfüllt | erfüllt | erfüllt | erfüllt |
| Kein Einfluss auf Bindungen | erfüllt | erfüllt | erfüllt | erfüllt |

### Verarbeitungsleistung

Mit der vorgängig beschriebenen Versuchsanlage wurden folgende Behandlungszeiten gemessen:

| **Prozessparameter** | **Dauer [Minuten] Behandlungspro- gramm *Standard*** | **Dauer [Minuten] Behandlungspro- gramm *Kurz*** |
|---|---|---|
| Beladung | 3' | 3' |
| Trocknung | 30' | 15' |
| Beladung | 15' | 10' |
| Entstauben | 5' | 5' |
| Entladen | 3' | 3' |
| Reinigung | 3' | 3' |
| **Totale Dauer = Kadenz** | **59'** | **39'** |

Wenn von einer Verfügbarkeit der Anlage von 19 Tagen pro Monat und einer Beladung pro Charge mit 20 kg Büchern ausgegangen wird, lassen sich je nach gewähltem Programm zwischen 35 bis 58 t Bücher pro Jahr dauerhaft entsäuern.

Der Einsatz einer chemischen Entfeuchtungskammer 43 ist besonders wirtschaftlich in kleineren Anlagen. Dabei genügt eine Zuführung des Nebenstromes N₁ von einem ölfreien Kompressor (Restfeuchtigkeit RH 15 % bei 25°C) in eine 30 cm hohe Trockenkammer von 300 cm² Grundfläche, beladen mit Silikagel von 3 bis 5 cm Höhe. Die resultierende Feuchte im Nebenstrom N₁' beträgt dabei 3 % RH. In grösseren Anlagen wird vorzugsweise der Nebenstrom N₁ vom Hauptstrom H abgezweigt und ebenfalls chemisch entfeuchtet, vgl. Fig. 14.

In grossen Anlagen empfiehlt es sich, ein separates Kühlaggregat mit einer durch einen Zyklonabscheider versehenen Luftführung vorzusehen, damit die notwendige Entfeuchtung und eventuelle nachträgliche Erwärmung ausserhalb des Kastens 10, ohne Korrosions- und Vereisungsgefahr durchgeführt werden kann.

Selbstverständlich kann im Sinne einer kinematischen Umkehr auch die Aufnahmevorrichtung für das Schriftgut bewegt werden und die Flachstrahlen können ortsfest eingesetzt werden.

Ebenfalls können dem Wirkstoff weitere Komponenten beigemengt werden, beispielsweise können dies Substanzen mit stark hygroskopischen Eigenschaften und geeignetem pH-Wert sein, wie Kaliumhydrogenphosphat und Ammoniumthiocyanat. Eine solche Mischung erscheint insbesondere bei hochgestrichenen Hochglanzpapieren eine Verbesserung der Ablagerung der alkalischen Reserve zu erbringen.

Der Erfindungsgegenstand zeichnet sich durch eine hohe Wirtschaftlichkeit aus; sowohl der Wirkstoff als auch die Anlage sind sehr kostengünstig in der Anschaffung und im Unterhalt.

Bei grosstechnischen Anwendungen - in grossen Bibliotheken etc. - kann der Erfindungsgegenstand durch Mittel des "Industrial handlings" auf einen grossen Durchsatz ausgerichtet und weitgehend automatisiert werden.

Die Anlage lässt sich leicht transportieren und kann vor Ort, beispielsweise in Archiven und Bibliotheken eingesetzt werden, so dass unnötige und zudem gefährliche Transporte von wertvollem Schriftgut entfallen.

## Patentansprüche

1. Alkalischer, pulverisierter Wirkstoff zur Entsäuerung von Schriftgut, insbesondere von gebundenen Büchern, wobei der Wirkstoff über Luft auf dem Schriftgut verteilt wird, **dadurch gekennzeichnet, dass** der Wirkstoff ein Gemisch von mindestens zwei getrockneten, anorganischen Salzen enthält, worin die anionischen Teile der Salze eine kleine Säurekonstante aufweisen, wobei Kaliumhydrogencarbonat, welches eine kleine Wasseraffinität besitzt, den Hauptbestandteil und Kaliumcarbonat, welches eine grosse Wasseraffinität besitzt, einen weiteren Bestandteil bilden.

2. Alkalischer Wirkstoff nach Anspruch 1, **dadurch gekennzeichnet, dass** Kaliumcarbonat im Wirkstoff in einem Anteil von 7 bis 15 Gew.-% vorhanden ist und der Wirkstoff eine mittlere Korngrösse von 20 bis 30 µm und eine Restfeuchte von weniger als 20 Gew.-% aufweist.

3. Alkalischer Wirkstoff nach Anspruch 1, **dadurch gekennzeichnet, dass** Kaliumcarbonat im Wirkstoff in einem Anteil von 0.1 bis 5 Gew.-% vorhanden ist und der Wirkstoff eine mittlere Korngrösse von 28 bis 35 µm und eine Restfeuchte von weniger als 15 Gew.-% aufweist.

4. Alkalischer Wirkstoff nach einem der Ansprüche 2 oder 3, **dadurch gekennzeichnet, dass** ein Zusatz von Kaliumhydrogenphosphat oder Ammoniumthiocyanat mit einem Anteil von 1 bis 5 Gew.-% im Wirkstoff vorhanden ist.

5. Alkalischer Wirkstoff nach einem der Ansprüche 2 bis 4, **dadurch gekennzeichnet, dass** 0,5 bis 2 Gew.-% Polystyrolkugeln mit 0,2 bis 2 mm Durchmesser dem Wirkstoff zugesetzt sind.
